# EUROPEAN PATENT SPECIFICATION

(11) **EP 2 028 526 B1**
(45) Date of publication and mention of the grant of the patent: **27.07.2011**
(21) Application number: 07254880.3
(22) Date of filing: 14.12.2007
(51) Int. Cl.: G02C 5/12, G02C 5/08, G02C 5/20, G02C 5/00

(54) **Spectacle frame**
Brillenfassung
Cadre de lunettes

(30) Priority: 24.08.2007 US 844380; 24.09.2007 US 860260
(43) Date of publication of application: 25.02.2009
(73) Proprietor: Faith Idea Limited, Tsimshatsui Kowloon/HK (CN)
(72) Inventor: Kwan, Po Kwong, Kowloon, Hong Kong (CN)
(74) Representative: Snipe, Benjamin Thomas Fletcher

(56) References cited:
- EP-A- 1 168 036
- GB-A- 258 748
- US-A- 2 965 099
- US-A- 5 896 185
- US-A- 6 132 042
- US-A- 6 158 860
- US-A1- 2005 270 480
- US-A1- 2007 132 938

## Description

This invention relates to a spectacle frame, and a pair of spectacles including such a spectacle frame.

### BACKGROUND OF THE INVENTION

There are spectacle frames of various constructions to which lenses may be mounted for forming spectacles for wearing.

It is usually necessary for the user to adjust the position of the nose pads (and thus of the spectacles) to achieve comfort in wearing when a user wears a pair of spectacles by placing the spectacles onto his/her nose. In most cases only very minor adjustment to the position of the nose pads may be made. In some cases, it may even be necessary to forcibly bend the links joining the nose pads and the spectacle frame to suit individual needs. This may damage or even break the links and, thus, the spectacles.

In addition, in order to minimize the space occupied by a pair of spectacles, e.g. for storage, there are in existence spectacle frames in which the bridge and two arms may be folded. Although such spectacle frames may be folded, it is found that the nose pads which are, in use, in abutment with the nose of a user and prevent the spectacle frames from being folded compactly.

The document US6158860 is regarded as the closest prior art and discloses a foldable spectacle frame for which the nose pads can be in abutment with one another in a foldable position without preventing the spectacles from being folded compactly. The mechanism for holding the nose pads is in that document a coil being twisted.

It is thus an object of the present invention to provide a spectacle frame and a pair of spectacles in which the aforesaid shortcomings are mitigated, or at least to provide a useful alternative to the trade and public.

### SUMMARY OF THE INVENTION

It is a primary object of the invention to overcome the shortcoming of known existing spectacle frames and provide an improved link member for the nose pad to the spectacle frame that allows nose pad to be adjusted according to the shape of the nose of the wearer and further allows a closely folded up configuration of the spectacle frame.

The above mentioned problems is solved with a spectacle frame with the features of claim 1.

### BRIEF DESCRIPTION OF THE DRAWINGS

Preferred embodiments of the present invention will now be described, by way of examples only, with reference to the accompanying drawings, in which:
Fig. 1 is a front perspective view of a pair of eyeglasses incorporating a spectacle frame assembly according to a first alternative example of the present invention;
Fig. 2 is a rear perspective view of the pair of eyeglasses shown in Fig. 1;
Fig. 3 is an enlarged view of the part marked "A" in Fig. 2;
Fig. 4 is an enlarged sectional view through the ball and socket joint between the nose pad and the spectacle frame of the pair of eyeglasses shown in Fig. 1;
Fig. 5 is another enlarged sectional view of the ball and socket joint shown in Fig. 4, taken through a plane perpendicular to that through which the view in Fig. 4 is taken;
Fig. 6 is an enlarged view showing the possible relative movement between the nose pad and the spectacle frame;
Fig.7 is a front perspective view of a pair of spectacles according to an embodiment of the present invention;
Fig.8 is a rear perspective view of the pair of spectacles shown in Fig.7;
Fig.9 is a further rear perspective view of the pair of spectacles shown in Fig. 8, showing folding of the pair of arms;
Fig. 10A is a yet further rear perspective view of the pair of spectacles shown in Fig. 9, showing further folding of the pair of arms;
Fig. 10B is a partial enlarged view of the pair of spectacles shown in Fig. 10A, showing the connection between the nose pad and the spectacle frame;
Fig. 10C is a further partial enlarged view of the pair of spectacles shown in Fig. 10A, showing movement of the nose pad;
Fig. 11 is a perspective view showing folding up of the pair of spectacles shown in Fig. 10A;
Fig. 12 is a bottom view of the pair of spectacles shown in Fig. 11;
Fig. 13A is front perspective view of a pair of spectacles of an alternative example;
Fig. 13B is a partial enlarged view of the pair of spectacles shown in Fig. 13A, showing the connection between the nose pad and the spectacle frame;
Fig. 13C is a further partial enlarged view of the pair of spectacles shown in Fig. 13A, showing movement of the nose pad;
Fig.14A is an enlarged sectional view of the nose pad linkage according to an alternative example;
Fig. 14B is an enlarged sectional view of the nose pad linkage according to another alternative example;
Fig. 15A is an enlarged sectional view of an alternative example with larger degree of movement of the nose pack; and
Fig. 15B is an enlarged sectional view of an alternative example with smaller degree of movement of the nose pack.

### DETAILED DESCRIPTION

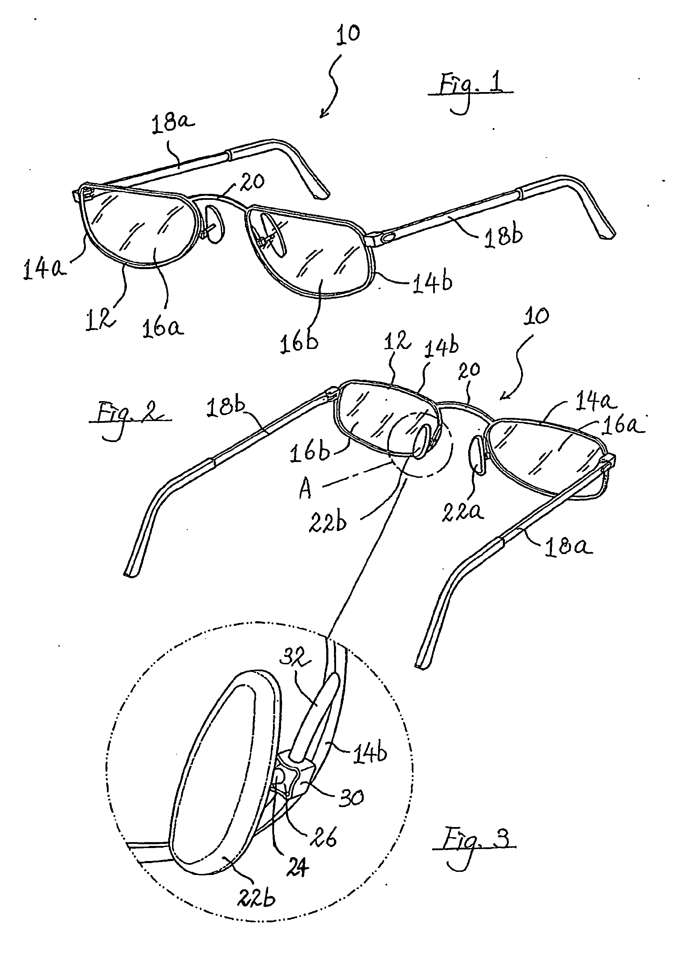

A pair of eyeglasses incorporating a spectacle frame assembly according to a first example, not part of the present invention, is shown in Figs. 1 and 2, and generally designated as 10. The pair of eyeglasses 10 includes a spectacle frame 12 with two mounting frames 14a, 14b to each of which a respective piece of optical lens 16a, 16b is releasably mounted. To the outer side of each mounting frame 14a, 14b is an arm 18a, 18b which is pivotable relative to the spectacle frame 12. The two mounting frames 14a, 14b are connected with each other via a bridge 20. To the inner side of each mounting frame 14a, 14b is engaged a nose pad 22a, 22b, in a manner to be further discussed below.

Fig. 3 shows that the nose pad 22b is engaged with the mounting frame 14b via a ball and socket joint. In particular, the nose pad 22b is fixedly engaged with a rod 24 with a rounded ball-like end 26 received within a cavity (not shown) of a generally cubic bracket 30, which is fixedly engaged with the mounting frame 14b via a rod 32.

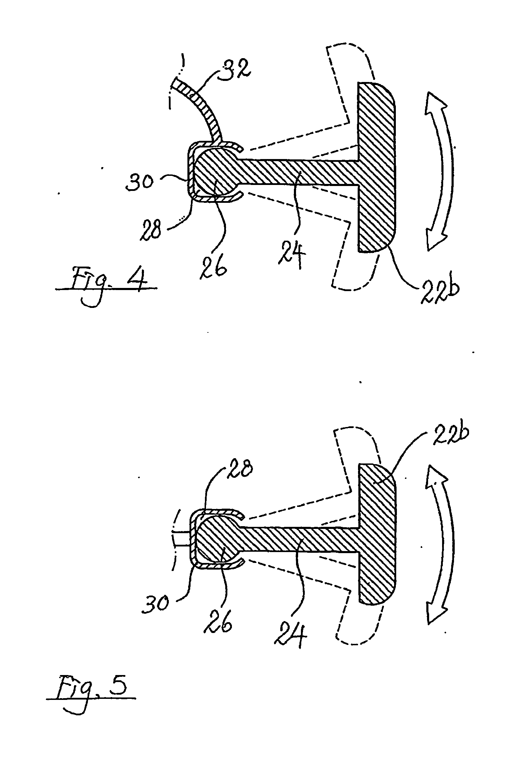

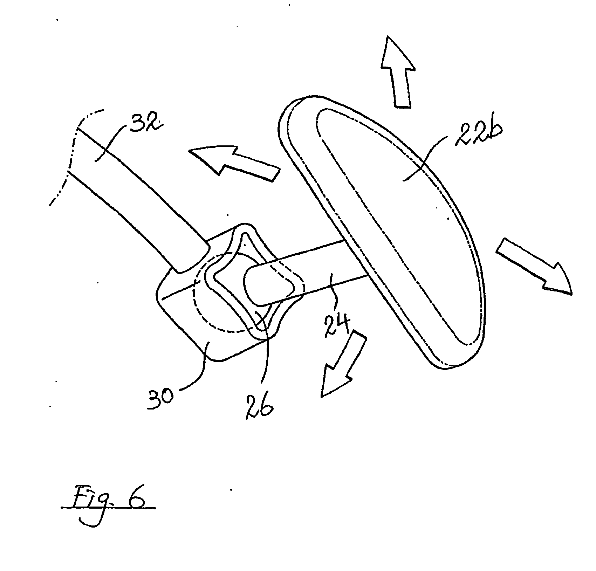

As can be seen more clearly in Fig. 4, and taking the nose pad 22b as an example, the nose pad 22b is fixedly engaged with a rod 24 with a rounded ball-like end 26 received within a cavity 28 of a generally cubic bracket 30, which is fixedly engaged with the mounting frame 14b via a rod 32. The walls of the bracket 30 are slightly deformed inwardly to bear on the outer surface of the ball-like end 26, so that the end 26 of the rod 24 cannot be retrieved from, but is rotatable relative to and within, the bracket 30, about the centre of the end 26. Fig. 4 clearly show that, because of the ball and socket joint between the nose pad 22b and the mounting frame (not shown), the nose pad 22b is rotatably movable relative to the bracket 30 (and thus the mounting frame (not shown) and the spectacle frame (not shown)) about a large number of axes with a common centre. Some of these axes are perpendicular to each other. Such an arrangement allows easy adjustment of the positions of the nose pads 22b on and relative to the nose of a user when in use. Fig 5 illustrates an enlarged sectional view of the ball and socket join taken through a plane perpendicular of Fig. 4. Fig 6 illustrates an enlarged view of the possible relative movement between the nose pad and the spectacle frame of Fig. 4.

In particular, it should be noted that although the present alternative example has thus far been described in the context of a spectacle frame in which the nose pad 22b is fixedly engaged with the rod 24 with the rounded end 26 received within the cavity 28 of the bracket 30 fixed to the mounting frame (not shown) via the rod 32, it is envisaged an alternative example which encompasses the arrangement in which the mounting frame is fixedly engaged with a rod with a rounded ball-like end received within a cavity of a bracket fixedly engaged with the nose pad.

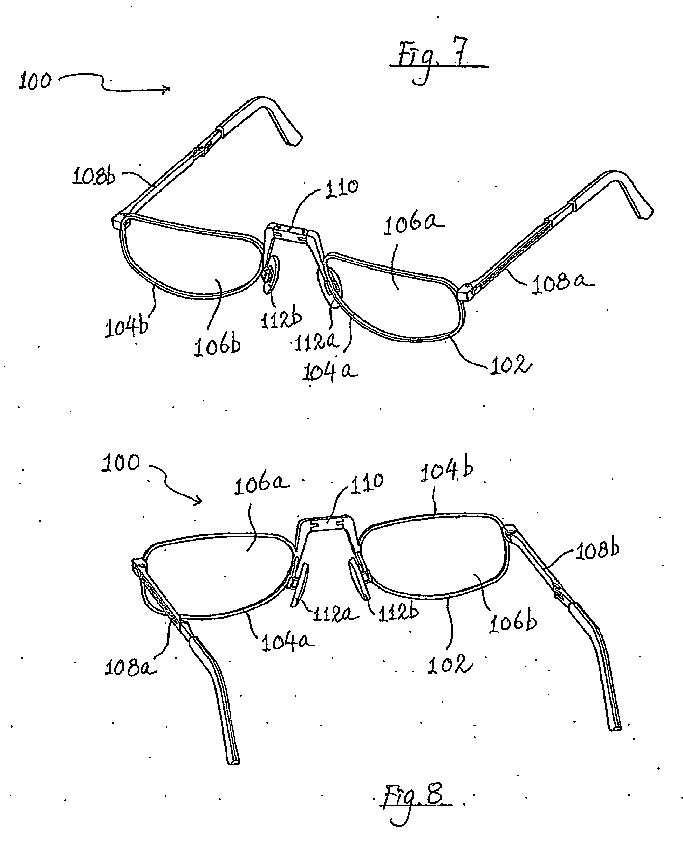

A pair of eyeglasses incorporating a spectacle frame assembly according to the main embodiment of the present invention is shown in Fig. 7, and generally designated as 100. The pair of spectacles 100 includes a spectacle frame 102 with two mounting frames 104a, 104b to each of which a respective piece of optical lens 106a, 106b is releasably mounted. To the outer side of each mounting frame 104a, 104b is an arm 108a, 108b which is pivotable relative to the respective mounting frame 104a, 104b. The two mounting frames 104a, 104b are connected with each other via a bridge 110. To the inner side of each mounting frame 104a, 104b is engaged a nose pad 112a, 112b, the structure of which will be further discussed below. Fig. 8 illustrates the rear perspective view of the pair of spectacles of Fig. 7.

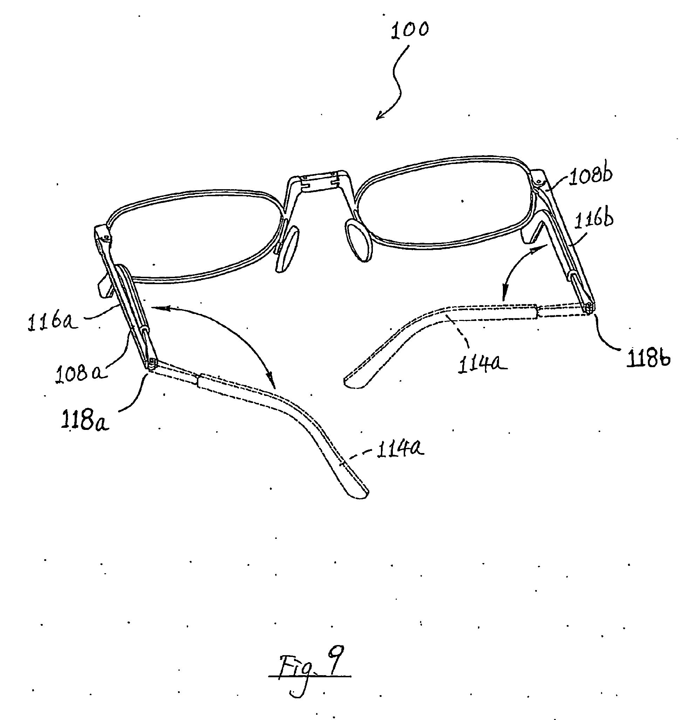

As shown in Fig. 9, each of the arms 108a, 108b includes two pivotable sections about joints 118a, 118b, allowing each respective outer section 114a, 114b of the arms 108a, 108b to pivot between the position shown in dotted lines and the position shown in solid line, to allow the outer sections 114a, 114b to bear on a respective inner section 116a, 116b of the arms 108a, 108b.

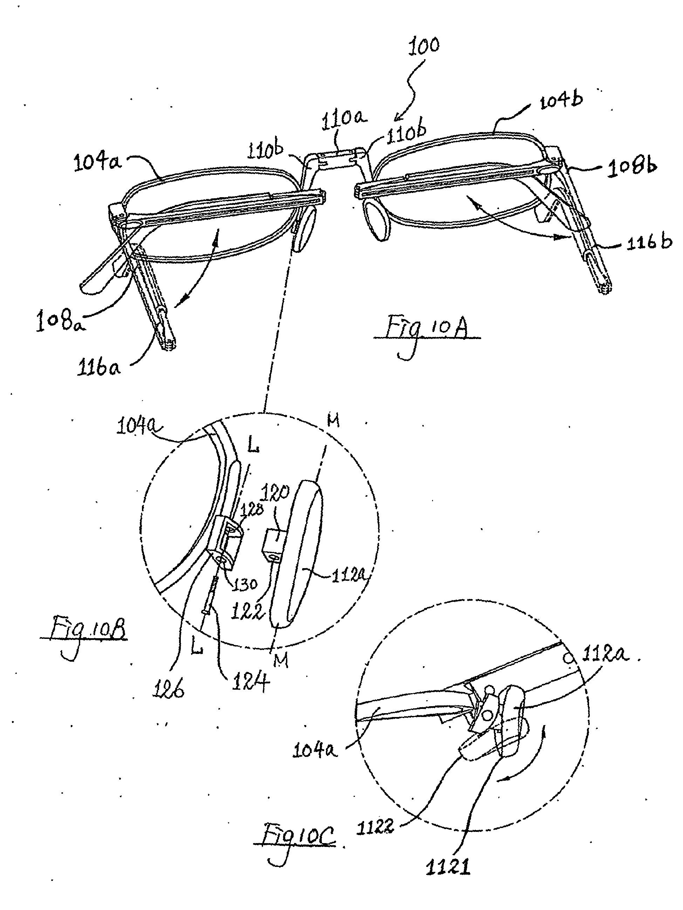

As shown further in Fig. 10A, the arms 108a, 108b may be further folded to the configuration as shown in solid lines by pivoting the inner sections, 116a, 116b onto the mounting frames 104a, 104b.

Turning now to Figs. 10B and 10C, it can be seen that the nose pad 112a is releasably engaged with the inner side of the mounting frame 104a. In particular, the nose pad 112a has a protrusion 120 with a through-hole 122. The through-hole 122 may be or may not be threaded. In any event, the through-hole 122 is sized to allow insertion of a screw 124. There is fixedly mounted to the mounting frame 104a a socket 126 with a space allowing insertion of the protrusion 120 of the nose pad 112a, such that the through-hole 122 of the protrusion 120 of the nose pad 112a aligns with two holes 128, 130 of the socket 126. By way of such an arrangement, the screw 124 may be received through the holes 128, 130 and through-hole 122 to releasably engage the nose pad 112a with the mounting frame 104a, which allows the nose pad 112a to swivel relative to the mounting frame 104a about an axis L-L which lies on a plane containing the mounting frame 104a. It can be seen that the axis L-L is parallel to the longitudinal axis of the screw 124 and a longitudinal axis M-M of the nose pad 112a.

In particular, and as shown in Fig. 10C, by way of the present arrangement, the nose pad 112a is swivellable relative to the mounting frame 104a between a position shown in solid line 1121 and a position shown in dotted line 1122. When the nose pad 112a is in the position shown in dotted line 1122, its major surface is generally parallel to the plane containing the mounting frame 104a.

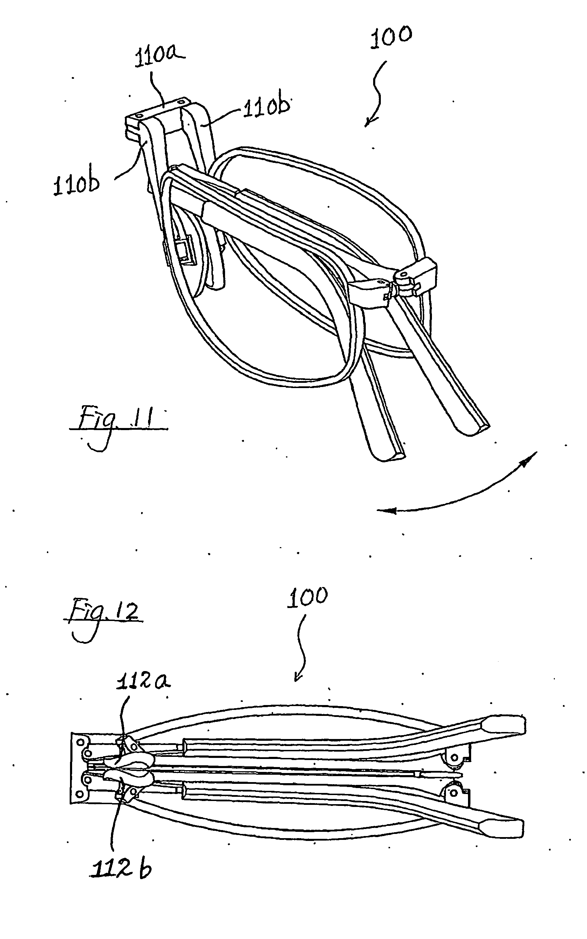

The pair of spectacles 100 may be folded up to the compact configuration as shown in Figs. 11 and 12, by folding of a pair of legs 110b relative to a connector 110a of the bridge 110. It can be seen in particular that when the pair of spectacles 100 is in the folded-up configuration as shown in Fig. 12, the nose pads 112a, 112b may be swiveled so that their respective free major surfaces are in abutment with each other, thus allowing the pair of spectacles 100 to assume the closely folded up configuration as shown in Figs. 11 and 12.

In addition, the manner of engagement between the nose pads 112a, 112b with the respective mounting frame 104a, 104b also allows easy self-adjustment of the position of the nose pads 112a, 112b, according to the shape of the nose of the wearer, without much intervention from the wearer.

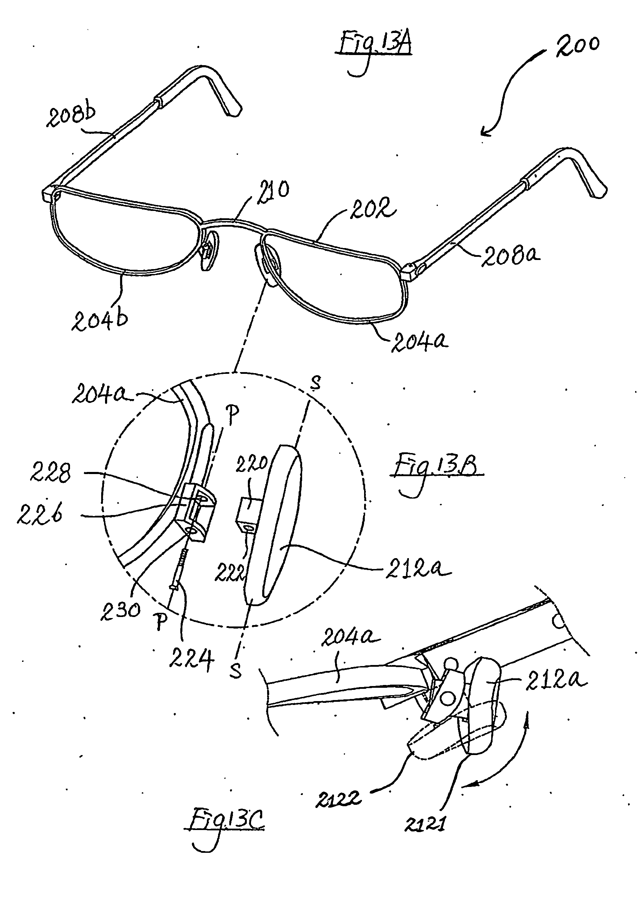

A pair of eyeglasses incorporating a spectacle frame assembly according to a third example, which does not fall under the scope of the claims of the present invention is shown in Figs. 13A, and generally designated as 200. The pair of spectacles 200 including a spectacle frame 202 with two mounting frames 204a, 204b, differs from the pair of spectacles 100 discussed above in that none of the two arms 208a, 208b and a bridge 210 of the spectacles 200 can be folded onto itself.

As shown in Figs. 13B and 13C, a nose pad 212a is releasably engaged with the inner side of a mounting frame 204a of a spectacle frame (not shown). The nose pad 212a has a protrusion 220 with a through-hole 222. The through-hole 222 may be or may not be threaded. In any event, the through-hole 222 is sized to allow insertion of a screw 224. There is fixedly mounted to the mounting frame 204a a socket 226 with a space allowing insertion of the protrusion 220 of the nose pad 212a, such that the through-hole 222 of the protrusion 220 of the nose pad 212a aligns with two holes 228, 230 of the socket 226. By way of such an arrangement, the screw 224 may be received through the holes 228, 230 of the socket 226 and the through-hole 222 of the protrusion 220 to releasably engage the nose pad 212a with the mounting frame 204a, which allows the nose pad 212a to swivel relative to the mounting frame 204a about an axis P-P which lies on a plane containing the mounting frame 204a. It can be seen that the axis P-P is parallel to a longitudinal axis of the screw 224 and a longitudinal axis S-S of the nose pad 212a.

As shown in Fig. 13C, by way of the present arrangement, the nose pad 212a is swivellable relative to the mounting frame 204a between a position shown in solid line 2121 and a position shown in dotted line 2122. When the nose pad 212a is in the position shown in dotted line 2122, its major surface is generally parallel to the plane containing the mounting frame 204a.

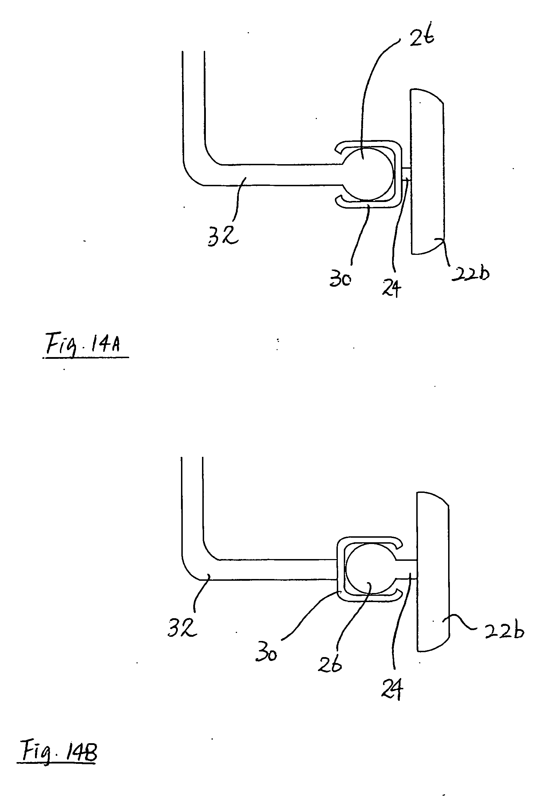

Fig. 14A shows an alternative example of the arrangement that the mounting frame (not shown) is fixedly engaged with a rod 32 with a rounded ball-like end being received within a cavity 28 of the bracket 30. The bracket 30 is fixedly engaged with the nose pad 22b via rod 24. Such arrangement allows easy and flexible adjustment of the positions of the nose pads 22b to fit the shape of the nose of a user when in use.

Fig. 14B illustrates an enlarged sectional view of another alternative example of the arrangement between the mounting frame (not shown) and the nose pad 22b. The nose pad 22b is connected to a rod 24 with a rounded ball-like end 26 being received within a cavity (not shown) of a cubic bracket 30. The cubic bracket 30 is further connected to the mounting frame (not shown) via a rod 32. The variation of the embodiment in Fig. 14B from Fig. 14A provides flexibility in designing the nose pads as spare parts.

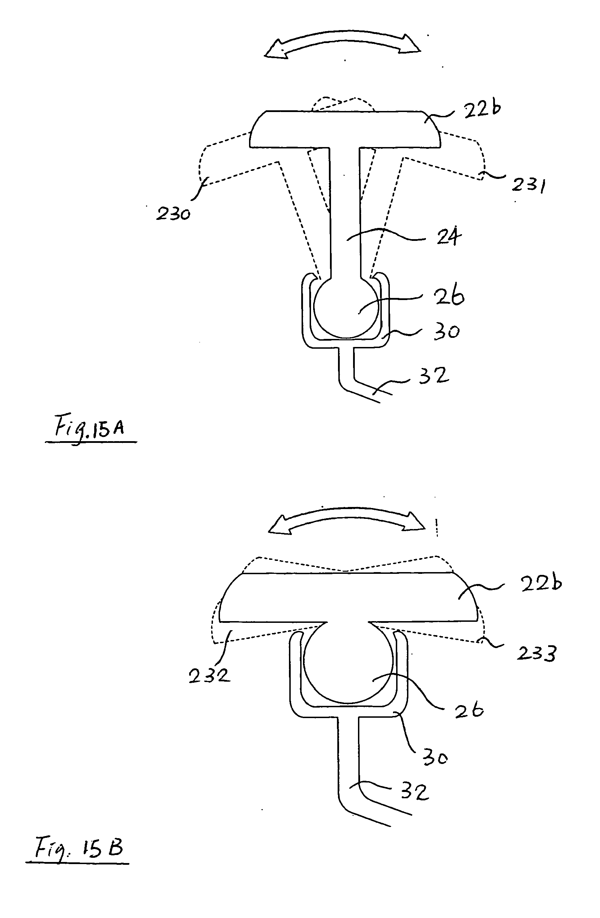

Fig. 15A shows that the nose pad 22b is fixedly engaged with a rod 24 with a rounded ball-like end 26 received within a cavity 28 of a cubic bracket 30. The nose pad 22b is swivellable relative to the rod 32 between a position shown in solid line 22b and a position shown in dotted line 230 and 231. It is shown that larger degree of movement is allowed when the rod 24 is longer.

Fig. 15B illustrates another alternative example of the arrangement that the nose pad 22b is fixedly engaged with a rounded ball-like end 26 received within a cavity 28 of a cubic bracket 30. The nose pad 22b is swivellable relative to the rod 32 between a position shown in solid line 22b and a position shown in dotted line 232 and 233. It is shown that smaller degree of movement is allowed when the rod 24 is shorter or absent. The arrangement of Fig. 15B provides smaller degree of movement of the nose pad. Such arrangements of Figs. 15A and 15B allow different degree of movement of the nose pads 22b within the bracket 30 that can be achieved by interchanging nose pads with rod 24 of different lengths.

## Claims

1. A foldable spectacle frame (102) comprising:
a pair of frame members (104a, 104b) each adapted to hold a piece of optical lens (106a, 106b),
a connector means (110a) pivotally connecting said frame members (104a, 104b),
a pair of arm members (108a, 108b), each having two pivotable sections, and two nose pads (112a, 112b), each engaged with a respective frame member (104a, 104b), each nose pad (112a, 112b) being swivellable by self-adjustment of the position of the nose pads (112a, 112b) according to the shape of the nose of the wearer about at least one axis (L-L) which is generally parallel to a plane containing said respective frame member,
**characterized in that** each nose pad is swivellable to a first position wherein a major surface of each nose pad (112a, 112b) for abutment with the nose of a user is generally parallel to a plane containing said respective frame member (104a, 104b), the nose pads swiveling into said first position so that the major surfaces face each other as the spectacle frame is folded into a closely folded configuration and in the closely folded configuration the major surfaces of each nose pad are in abutment.

2. A spectacle frame (102) according to claim 1, wherein said axis (L-L) is generally parallel to a longitudinal axis (M-M) of said respective nose pad (112a, 112b).

3. A spectacle frame (102) according to claim 1 wherein each said nose pad (112a, 112b) is engaged with said respective frame member (104a, 104b) via an engagement member having a rod (32) fixedly engaged with said respective frame member.

4. A spectacle frame (102) according to claim 3, wherein the rod (32) depends downwardly and away from a plane containing each respective frame member.

5. A spectacle frame (102) according to claim 3 or 4, wherein the rod is straight, curved or has a bend.

6. A spectacle frame (102) according to any of claims 3-5 wherein said engagement member is either a screw (124) which is substantially parallel to said respective axis of swiveling (L-L) or a ball and socket joint comprising a ball member (26) and a socket member (30).

7. A spectacle frame (102) according to claim 6 wherein each said socket member (30) is a bracket engaged with one of said frame member (104a, 104b) and nose pad, said bracket has a cavity (28) for receiving said ball member (26) and said ball member (26) is engaged with the other of said frame member (104a, 104b) and nose pad (112a, 112b).

8. A spectacle frame (102) according to any of claims 5, 6 and 7, wherein each said nose pad (112a, 112b) is movable relative to said frame member (104a, 104b) about a plurality of axes with one common centre.

9. A spectacle frame (102) according to any preceding claim, wherein each nose pad is releasably engaged.

10. A spectacle frame (102) according to any preceding claim, wherein said connector means is a bridge (110) having a pair of legs (110b) connecting the frame members, the pivotable sections of the arm members folding inwardly to bear on a respective inner section of the arm member, and each frame member folding onto itself when the spectacle frame is in the closely folded configuration.

## Patentansprüche

1. Ein faltbares Brillengestell (102), umfasst:
ein Paar Rahmengestelle (104a, 104b), von denen beide ausgelegt sind, jeweils eine optische Linse aufzunehmen (106a, 106b),
ein Schamierblock (110), der eine schwenkbare Verbindung zwischen den beiden oben genannten Rahmengestellen (104a, 104b) darstellt,
ein Paar Brillenbügel (108a, 108b), die jeweils über zwei schwenkbare Bereiche verfügen,
zwei Nasenauflageflächen (112a, 112b), die jeweils mit einem Rahmengestell verbunden sind (104a, 104b),
beide Nasenauflagflächen (112a,112b) sind mittels Selbstjustierungsfunktion der Nasenflügel (112a,112a) und abhängig von der Nasenform des Brillenträgers um mindestens eine Achse (L-L) schwenkbar, die normalerweise parallel zu dem entsprechenden Rahmengestell liegt,
**gekennzeichnet durch** die Schwenkbarkeit beider Nasenauflageflächen in die erste Position, bei der die überwiegende Fläche beider Nasenauflagefläche (112a, 112b) für einen optimalen Sitz der Brille parallel zu dem entsprechenden Rahmengestell (104a, 104b) liegt,
die Nasenauflageflächen können in diese erste Position gebracht werden, so dass sich der überwiegende Teil der Oberflächen beim Einklappen des Brillengestells parallel gegenüberliegt, in der vollständig eingeklappten Position befindet sich der Großteil der Nasenauflagefläche aufeinander.

2. Ein Brillengestell (102) gemäß Anspruch 1, bei dem oben genannte Achse (L-L) sich im Normalfall parallel zu einer Längsachse (M-M) der entsprechenden Naseauflagefläche (112a, 112b) befindet.

3. Ein Brillengestell (102) gemäß Anspruch 1, bei dem beide bereits erwähnten Naseauflageflächen (112a, 112b) mit dem entsprechenden Rahmengestell (104a, 104b) mittels eines Verbindungsglieds und eines Stifts (32) mit dem entsprechenden Rahmengestell verbunden sind.

4. Ein Brillengestell (102) gemäß Anspruch 3, bei dem der Stift (32) nach unten und von der Ebene absteht, auf der sich die Rahmengestelle befinden.

5. Ein Brillengestell (102) gemäß Anspruch 3 oder 4, bei dem der Stift (32) gerade, gebogen oder gekrümmt ist.

6. Ein Brillengestell (102) gemäß Anspruch 3-5, bei dem das erwähnte Verbindungsglied entweder aus einer Schraube (124) besteht, die im Wesentlichen parallel zu der entsprechenden Schwenkachse (L-L) ist, oder aus einem Kugelgelenk, bestehend aus einer Kugel (26) und einer Pfanne (30).

7. Ein Brillengestell (102) gemäß Anspruch 6, bei dem jede der besagten Pfannen (30) eine Halterung darstellt, die mit einem der besagten Rahmengestelle (104a, 104b) und Nasenauflageflächen verbunden ist, die besagte Halterung verfügt über eine Ausnehmung (28), die die Kugel (26) aufnimmt und besagte Kugel (26) ist mit der Halterung des Rahmengestells (104a, 104b) und der Nasenauflagefläche (112a, 112b) verbunden.

8. Ein Brillengestell (102) gemäß Anspruch 5, 6 oder 7, bei dem beide Nasenauflageflächen (112a, 112b) an dem jeweiligen Rahmengestell (104a, 104b) um eine Vielzahl von Achsen mit einem gemeinsamen Zentrum bewegbar angebracht sind.

9. Ein Brillengestell (102) gemäß aller vorausgegangenen Ansprüche, bei dem beide Nasenauflagenflächen lösbar miteinander verbunden sind.

10. Ein Brillengestell (102) gemäß allen vorausgegangenen Ansprüchen, bei dem die besagte Verbindung aus einem Steg (110) besteht, der über zwei Fühler (110b) verfügt, die die Rahmengestelle mit dem Steg verbinden und die schwenkbaren Scharniere des hinteren Bügelteils nach innen geklappt werden können, so dass sie zum größten Teil auf dem jeweiligen vorderen Bügelteil liegen und beide Rahmengestelle aufeinander liegen, wenn das Brillengestell vollständig eingeklappt wird.

## Revendications

1. Une monture de lunettes pliable (102) comprenant :
une paire de cercles (104a, 104b) chacun adapté pour maintenir un verre optique (106a, 106b),
un élément connecteur (110a) pivotant, reliant lesdits cercles (104a, 104b),
une paire de branches (108a, 108b), ayant chacune deux sections pivotantes et deux plaquettes (112a, 112b), chacune fixée au cercle correspondant (104a, 104b),
chaque plaquette (112a, 112b) étant orientable, par autoréglage de la position des plaquettes (112a, 112b) en fonction de la forme du nez du porteur, sur au moins un axe (L-L), qui est en général parallèle à un plan contenant ledit cercle correspondant,
**caractérisé par le fait que** chaque plaquette est orientable en une première position dans laquelle la surface principale de chaque plaquette (112a, 112b) en butée avec le nez du porteur est généralement parallèle à un plan contenant ledit cercle correspondant (104a, 104b), les plaquettes étant orientables dans ladite première position, de sorte que les surfaces principales se fassent face lorsque la monture est pliée dans une configuration repliée serrée et dans la configuration repliée serrée les surfaces principales des deux plaquettes sont en butée.

2. Une monture de lunettes (102) selon la revendication 1, dans laquelle ledit axe (L-L) est en général parallèle à un axe longitudinal (M-M) de ladite plaquette correspondante (112a-112b).

3. Une monture de lunettes (102) selon la revendication 1, dans laquelle chacune desdites plaquettes (112a, 112b) est fixée au cercle correspondant (104a, 104b) par un élément d'engagement comportant une tige (32) dudit cercle correspondant.

4. Une monture de lunettes (102) selon la revendication 3, dans laquelle la tige (32) descend vers le bas et à une certaine distance d'un plan contenant chaque cercle correspondant.

5. Une monture de lunettes (102) selon la revendication 3 ou 4, dans laquelle la tige est droite, courbe ou présente un coude.

6. Une monture de lunettes (102) selon une des revendications 3-5, quelle que ce soit, dans laquelle ledit élément d'engagement est soit une vis (124) qui est substantiellement parallèle à l'axe de pivotement correspondant (L-L) ou un joint à rotule comprenant un élément en forme de sphère (26) et une alvéole permettant l'emboîtement de la rotule. (30).

7. Une monture de lunettes (102) selon la revendication 6, dans laquelle chacune desdites alvéoles (30) est un embout fixé à l'un desdits cercles (104a, 104b) et de la plaquette, ledit embout comporte un évidement (28) pour recevoir ledit élément en forme de sphère (26) et ledit élément en forme de sphère (26) est fixé à l'autre cercle (104a, 104b) et plaquette (112a, 112b).

8. Une monture de lunettes (102) selon une des revendications 5, 6 et 7, quelle que ce soit, dans laquelle chacune desdites plaquettes (112a, 112b) est mobile par rapport audit cercle (104a, 104b) sur plusieurs axes ayant un centre commun.

9. Une monture de lunettes (102) selon une des revendications précédentes, quelle que ce soit, dans laquelle chaque plaquette est fixe mais libérable.

10. Une monture de lunettes (102) selon une des revendications précédentes, quelle que ce soit, dans laquelle ledit élément connecteur est un pont (110) avec deux bras (110b) qui relient les cercles, les sections pivotantes des branches se pliant vers l'intérieur en s'appuyant sur la partie intérieure de la branche correspondante et chaque cercle se pliant sur lui-même lorsque la monture est dans la configuration repliée serrée.
